# EUROPEAN PATENT APPLICATION

(11) **EP 4 345 462 A1**
(43) Date of publication of application: **03.04.2024**
(21) Application number: 23199353.6
(22) Date of filing: 25.09.2023
(51) Int. Cl.: G01N 35/04

(54) **SAMPLE PURIFICATION DEVICE**

(30) Priority: 27.09.2022 LU 103022
(71) Applicant: Stratec SE, 75217 Birkenfeld (DE)
(72) Inventor: Maschke, Uwe, 75217 Birkenfeld (DE); Horvath, Tibor, 75217 Birkenfeld (DE); Duong, Thanh-Di, 75217 Birkenfeld (DE)
(74) Representative: Tegethoff, Sebastian

(57) **Abstract**

The invention relates to a device for the purification of samples and provides a device for the purification of samples, comprising a rotatable carousel with container-receiving position, each for receiving a container and a fixed circuit board attached to one side of the carousel, wherein the fixed circuit board comprises a toothed rack guiding for vertically moving an aspiration needle up and down; a motor for actuating the toothed rack; light barriers for determining the angle of rotation of the carousel; bubble sensors for monitoring aspiration of fluids from the containers and for monitoring rinsing of the aspiration needle; and wherein the rotatable carousel comprises four vertically on top of each other arranged level, wherein a first level, which is the upper level, comprises injector assemblies which are arranged on a first level plate for dispensing fluids and an aspiration needle rinsing station for cleaning of the vertically crossing aspiration needle which is arranged onto said first level plate; a second level, below the upper level, comprises a plurality of container-receiving position, each for receiving a container, wherein each container-receiving position of the plurality of container-receiving position is arranged above a second level plate; a third level, below the second level, comprises stacked printed circuit boards; a fourth level, below the third level, comprising a base plate comprising counter bearings for the centrally arranged rotor axis comprising a motor as a drive for rotating the carousel and slide bearings between an upper end of the rotor axis and the first plate and between the base plate and the lower end of the rotor axis.

## Description

### Field of the Invention

The invention relates to a device for the purification of samples.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

With respect to the analysis of specimen or samples, it may be necessary to purify specimen or samples. The purification may comprise dispensing and aspirating appropriate solutions. A container comprising a sample will be transferred to a section or device of an automated analyser system which is equipped for performing the respective washing steps.

Such a device for the purification of samples may comprise elements for moving racks comprising multiple containers. Alternatively, rotating carousels are known in the prior art providing positions for receiving container comprising a sample.

The processing of a sample comprises usually dispensing and aspirating fluids depending on the respective protocol of an assay that is to be performed with a sample. Numerous assays comprise washing steps where washing buffer is added to a sample and aspirated. Identical or different washing buffer may be used in a single or multiple washing steps to purify the sample which is to be analysed.

Published U.S. patent US 7,427,376 B2 discloses a sample analyser which includes a liquid aspirator to be stuck into the closed container for aspirating a sample from a closed container; a preparing section for preparing an analysis sample using the aspirated sample; and an analysing section for analysing the prepared analysis sample; the liquid aspirator including an elongated pipe, the pipe having a liquid flow path extending therein and a plurality of communicating sections provided in an outer surface thereof, at least one of the communicating sections communicating between an inside and an outside of the container when the pipe is stuck into the container.

Published U.S. patent application US 2003/027206 A1 discloses An automated analyzer for performing multiple diagnostic assays simultaneously includes multiple stations, or modules, in which discrete aspects of the assay are performed on fluid samples contained in reaction receptacles. The analyzer includes stations for automatically preparing a specimen sample, incubating the sample at prescribed temperatures for prescribed periods, preforming an analyte isolation procedure, and ascertaining the presence of a target analyte. An automated receptacle transporting system moves the reaction receptacles from one station to the next. The analyzer further includes devices for carrying a plurality of specimen tubes and disposable pipette tips in a machine-accessible manner, a device for agitating containers of target capture reagents comprising suspensions of solid support material and for presenting the containers for machine access thereto, and a device for holding containers of reagents in a temperature-controlled environment and presenting the containers for machine access thereto. A method for performing an automated diagnostic assay includes an automated process for isolating and amplifying a target analyte. The process is performed by automatically moving each of a plurality of reaction receptacles containing a solid support material and a fluid sample between stations for incubating the contents of the reaction receptacle and for separating the target analyte bound to the solid support from the fluid sample. An amplification reagent is added to the separated analyte after the analyte separation step and before a final incubation step.

Published U.S. patent US 5,216,926 A discloses an automatic sampling apparatus to use bang-bang fluid driven actuators whose control system is modified to permit accurate positioning over its range of motion. The actuators are positioned to aspirate liquid contents held within stoppered sample containers and equilibrate pressure in the sample containers to atmospheric prior to aspiration.

Thus, there is a need for an device allowing the safe and independent handling of fluids required during the processing of a sample in a container.

### Summary of the Invention

The present invention provides a device for the purification of samples, comprising a circular carousel which is rotatable around a vertical central axis and provides a plurality with a plurality of container-receiving positions, and a fixed side wall attached to one side of the carousel, wherein the fixed side wall comprises
- a side wall PCB mounted to the fixed side wall;
- a toothed rack guiding for vertically moving an aspiration needle up and down;
- a motor for actuating the toothed rack;
- light barriers for determining the angle of rotation of the carousel;
- bubble sensors for monitoring aspiration of fluids from the containers and for monitoring rinsing of the aspiration needle; and wherein
the rotatable carousel comprises four vertically on top of each other arranged level, wherein
- a first level, which is the upper level, comprises injector assemblies which are arranged on a first level plate for dispensing fluids and an aspiration needle rinsing station for cleaning of the vertically crossing aspiration needle which is arranged onto said first level plate;
- a second level, below the upper level, comprises a plurality of container-receiving position, each for receiving a container, wherein each container-receiving position of the plurality of container-receiving position is arranged above a second level plate;
- a third level, below the second level, comprises stacked printed circuit boards;
- a fourth level, below the third level, comprising a base plate comprising counter bearings for the centrally arranged rotor axis of a motor as a drive for rotating the carousel and a slide bearing between an upper end of the rotor axis and the first plate;
wherein one position of the plurality of container-receiving positions is configured for a loading and unloading of containers to the carousel, wherein one position of the plurality of container-receiving positions provides an injector assembly configured for aspirating fluids by a connected pump, and wherein the remaining positions of the plurality of container-receiving positions provide an injector assembly configured for dispensing a fluid by a connected pump.

A further aspect relates to the toothed rack guiding which may comprise a bore and guiding with at least one slide bearing which is crossed vertically by the toothed rack.

In another embodiment, the needle holder may be arranged at the upper end of the toothed rack, and wherein the aspiration needle is fixed to the needle holder.

It is further intended that the aspiration needle can be mounted horizontally movable in x- and y- direction to the needle holder.

The invention relates further to a device, wherein the gear wheel connected to the motor for actuating he toothed rack engages into the gearing of the toothed rack.

In another embodiment, a single injector unit may comprise an injector manifold which is fixed on top of the first level plate, and which carries two valves.

The invention relates also to a device, wherein each injector unit comprises two fluid supply connectors for connecting a hose coming from a fluid supply and a single waste connector for connecting a hose to a waste.

It is also envisaged that the aspiration needle rinsing station comprises an outer part and an inner part, wherein a rinsing channel runs through both parts.

Another aspect of the invention relates to an embodiment, wherein the inner part of the aspiration needle rinsing station is sealed against the outer part of the aspiration needle rinsing station and the rinsing channel surrounds in the inner part the bore and guiding for the vertically crossing aspiration needle.

The outer part of the aspiration needle rinsing station may comprise a first and a second hose connector, wherein the first hose connector connects a hose coming from a rinsing buffer supply and the second hose connector connects a hose leading to a first bubble sensor on the fixed circuit board.

In a further embodiment have each container-receiving position of the plurality of container-receiving positions a cylindrical shape and a recess one side at its bottom end.

It is further intended that each container-receiving position of the plurality of container-receiving positions is connected eccentrically through a motor shaft to the motor.

The motor for actuating the container-receiving positions can be an EC motor comprising a plurality of Hall sensors.

An optical sensor can be arranged on the fixed circuit board at the level of the recesses of the container-receiving position for reflective distance measuring.

The PCBs of the third level may comprise plugs for the connection of the stacked printed circuit boards to each other and plugs for the connection of the stacked printed circuit boards to an external controller and the motors as drives for each container-receiving position.

It is further intended that the fixed circuit board is arranged vertically on one side of the rotatable carousel, wherein the fixed circuit board is a control unit comprising a data storage.

Another object of the present invention relates to a system comprising a device as described above and a housing, wherein the rotatable carousel is arranged in the housing in a manner allowing the loading and unloading of containers only at one position during rotation of the carousel.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows in a perspective view an embodiment of a wash carousel according to the present invention.
FIG. 2 shows in more detail the aspiration needle according to the invention.
FIG. 3 shows a slide bearing of the toothed rack guiding in detail.
FIG. 4 shows in more detail the needle rinsing station which consists of an inner part and an outer part.
FIG. 5A shows a perspective view onto an injector unit which comprises two independent valves.
FIG. 5B shows a top view onto an injector unit.
FIG. 5C shows a bottom view onto a transparent injector manifold showing channels inside the injector manifold.
FIG. 6 shows a view on the lower surface of the first level plate with injectors going through openings of the top plate.
FIG. 7 shows an embodiment of a wash carousel according to the present invention with a container-receiving position level comprising five container-receiving positions.
FIG. 8 shows the sealing elements for the level below the second level with container-receiving positions.
FIG. 9A shows a container-receiving position in a perspective view.
FIG. 9B shows a top view onto or into a container-receiving position mounted eccentrically onto a holder drive.
FIG. 10 shows a container-receiving position which is mounted to the motor axis so that the container follows an orbital movement.
FIG. 11 shows teach brackets which are used for fixing the container-receiving positions in a defined position.
FIG. 12 shows a sectional view through a wash carousel according to the present invention.
FIG. 13 shows the control electronics for the wash carousel which comprises in the shown embodiment three identical, stacked PCBs.
FIG. 14 shows a circuit diagram for clear control of the motors.
FIG. 15 shows a base plate which carries the entire assembly of the wash carousel and serves as a counter bearing for the rotating rotor drive.
FIG. 16 shows a light barrier which is positioned in proximity to the PCBs on the vertically arranged fixed circuit board.
FIG. 17 shows the elements which are involved for actuating the toothed rack for moving the aspiration needle.
FIG. 18 shows the elements which are used for controlling aspiration and rinsing of the aspiration needle.

### Detailed Description of the Invention

The technical problem is solved by the independent claims. The dependent claims cover further specific embodiments of the invention.

The term container relates to a consumable which relates within the present disclosure to a device which provides cavities, receptacles, or recesses for receiving a fluid which can be a liquid like a patient sample for instance. A container can be a tube.

The term fluid refers to a liquid or gas which both may comprise solids. The term patient sample relates to any body liquid like whole blood, urine, lymph or saliva. A sample may already have undergone prior treatments like centrifugation so that the sample is provided in a specific state.

The present invention relates to an assembly or system comprising a wash carousel. A wash carousel within the meaning of the present disclosure relates to a circular carousel which is rotatable around a vertical central axis and provides a plurality of container-receiving positions The system comprises electronics (printed circuit boards) which can be identical, but which are stacked in three different sub-level for addressing different tasks. The PCBs in each level are protected from overflowing liquids.

The system comprises an aspiration needle which is used for aspirating fluids from a container. The aspiration needle is movable in x- and y-direction for tolerance compensation in these planes. The aspiration needle can be made of metal. Rinsing of the aspiration needle is possible in an aspiration needle rinsing station which is an integral part of the system so that contaminations which may adhere to the outer surface of the needle can be removed prior to using a tip or needle, in particular in a different fluid.

A device according to the present invention relates to a rotatable carousel which may comprise in an embodiment five independent positions for the processing of a sample in a container. Injectors are used in certain positions for dispensing up to six different fluids like buffer or reagents.

The loading and unloading of a container will always be done at the same position of the wash carousel. Besides the position for loading or unloading there are five further positions present. The containers are placed into container-receiving position which are mounted on a rotatable plate. Each container-receiving position itself is mounted above a motor as a drive for mixing of the respective contents in a container by eccentric rotation resulting in an orbital movement. Each container-receiving position comprises an integrated unbalance correction. The transfer container-receiving position for loading or unloading is accessible by a user or a device for the loading or unloading. It is the only position of the carousel which is accessible from the outside. The transfer position can be arranged behind a flap or a movable part of a housing for making the position accessible.

Aspiration and rinsing of a pipette tip or needle is monitored by an optical air bubble sensors. An optical sensor is further used for the initialization of the container-receiving position drives by a combination of absolute encoder and detection of the container-receiving position by said optical sensor.

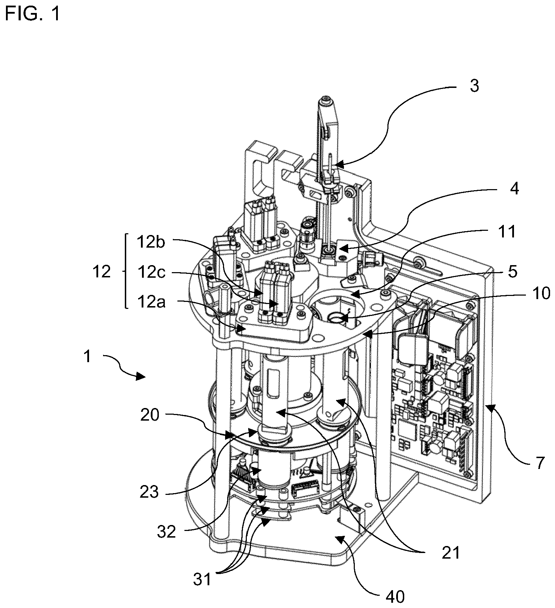

FIG. 1 shows in a perspective view an embodiment of a wash carousel 1 according to the present invention which allows a sample purification in automatic analysers. The specific design is space-saving and can be used very flexible. The wash carousel has on one side a vertically arranged fixed side wall 8 and the rotatable wash carousel comprises four vertical level arranged besides the fixed vertically arranged side wall 8. The fixed side wall 8 leaves the system essentially open regarding its other sides when not arranged in an automated analyser system.

The four level of the rotatable wash carousel can be characterised in an embodiment referring to FIG. 1 as follows:
1. The first and upper level is limited to the lower level by first level plate 10. This level may also be regarded as an "injector level" comprising a plurality of injector units at certain positions for dispensing fluids in container 5. One position comprises an upper opening 11 in a first level plate 10 so that a container 5 can be inserted into the wash carousel 1 through opening 11. In an embodiment of a wash carousel 1, it may comprise five container positions. Three of the five positions can be equipped with an injector unit 12 in the first level comprising besides an injector manifold 12a, two valves 12b, 12c for each of the three positions. A first valve 12b of the two valves 12b, 12c can be used for dispensing a first liquid into the container and a second valve 12c of the two valves 12b, 12c is used for dispensing another fluid into the container or the identical fluid with a different volume.
2. The second level is limited to the lower level with a second level plate 20 and comprises five identical, motor-driven container-receiving position 21 units mounted on holder drive 32, wherein the motor shaft of the drive goes through second level plate 20. A protective cover element 23 is placed on second level plate 20 for protecting the electronics located underneath this level from fluids. This level can be designated as the "container-receiving position level".
3. The third level comprises in the embodiment shown in FIG. 1 three identical, stacked PCBs 31 and can thus be regarded as the "electronics level". The PCBs 31 control the motors of the holder drive 32. One motor rotates the wash carousel and further motors are connected to the container-receiving position 21 mounted onto it for rotating the respective container-receiving position 21.
4. The fourth level is limited by a base plate 40 comprising star shaped connector 700 for fixing rotor axis 502 of wash carousel 1 and space bolts 701 for fixing first level plate 10. This level can be regarded as the "base level".

The following sequence of steps is exemplary for a system according to the present invention. It is obvious for a person having ordinary skill in the art that the kind of steps or their sequence may vary. Turning is usually performed clockwise and counter clockwise during operation of the carousel, depending on the required movement of the rotatable carousel.

There may also be processes in which at least one fluid is only dispensed via the injectors and no aspiration takes place. The following steps are exemplary for an embodiment of a method that is performed using an embodiment of a device according to the present invention:
1. A container comprising a patient sample is inserted into the carousel in the transfer position by an external gripper. Such a patient sample can be centrifuged blood for example.
2. A motor rotates second level plate 20 by 72° counter clockwise.
3. Content in the container which is not required is aspirated by aspiration needle 3. Either liquid above the desired sample, or the complete aspiration of the liquid, wherein the desired remainder has accumulated at the edge of the tube due to the previous centrifugation, and the aspiration needle aspirates in the middle of the tube.
4. A motor rotates second level plate again by 72° counter clockwise.
5. Injection of up to two reagents (optional).
6. Orbital movement through rotation of the container-receiving position for mixing of the contents (optional).
7. A motor rotates second level plate by 72° counter clockwise.
8. Injection of up to two reagents (optional).
9. Orbital movement through rotation of the container-receiving position for mixing of the contents (optional).
10. A motor rotates second level plate by 72° counter clockwise.
11. Injection of up to two reagents (optional).
12. Orbital movement through rotation of the container-receiving position for mixing of the contents (optional).
13. Removal of the container for further analysis, or further process steps such as centrifugation (or incubation, etc.).

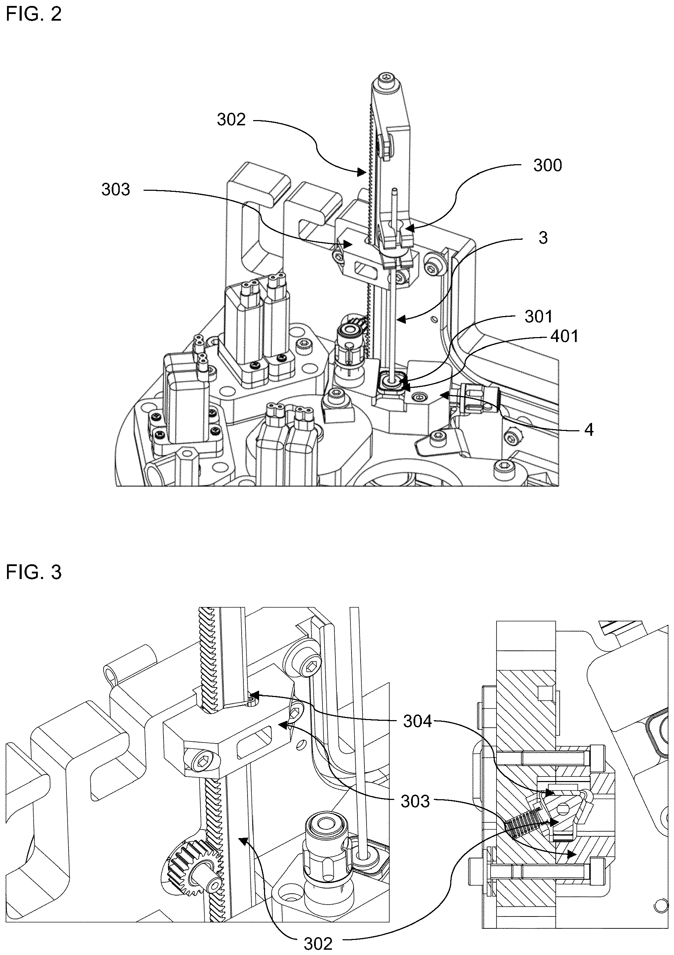

FIG. 2 shows in more detail the aspiration needle 3. The aspiration needle 3 enables the aspiration of fluids from the container (not shown) which are no longer required. It is mounted movably in its holder 300 with respect to a horizontal movement in a x- and y-axis to enable a compensation of mechanical tolerances. In the vertical z-direction on the other hand, the needle is fixed movably without tolerances. The aspiration needle 3 always pass a bore and guiding 301 located in an inner part 401 of needle rinsing station 4 (comp. FIG. 2) without tension due to the possible horizontal movement.

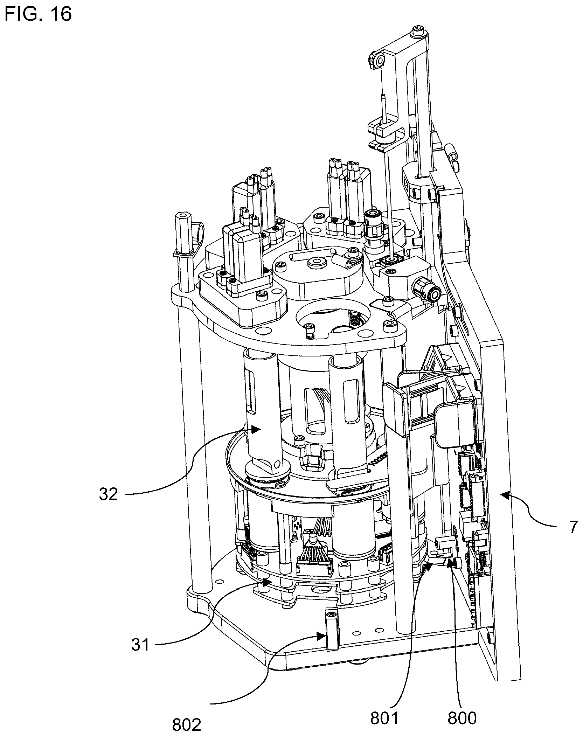

The aspiration needle 3 is driven in the vertical z-direction by a motor (shown in FIG. 16) and toothed rack 302. FIG. 3 shows that the toothed rack 302 is guided by means of two slide bearings 304 in a toothed rack guiding 303, wherein one slide bearing is shown in FIG. 3 in more detail in both parts.

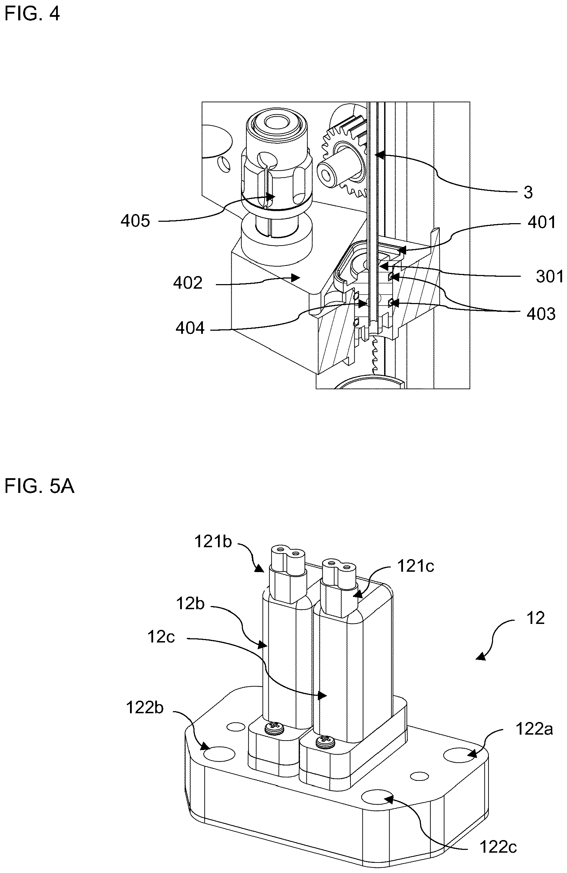

FIG. 4 shows in more detail needle rinsing station 4 which comprises an inner part 401 and an outer part 402. Two O-rings 403 are used for sealing of the inner part 401 to the outer part 402, wherein the inner part 401 comprises the rinsing channel 404 which surrounds the aspiration needle 3 in its bore and guiding 301 for the aspiration needle which crosses the needle rinsing station 4 through it vertically.

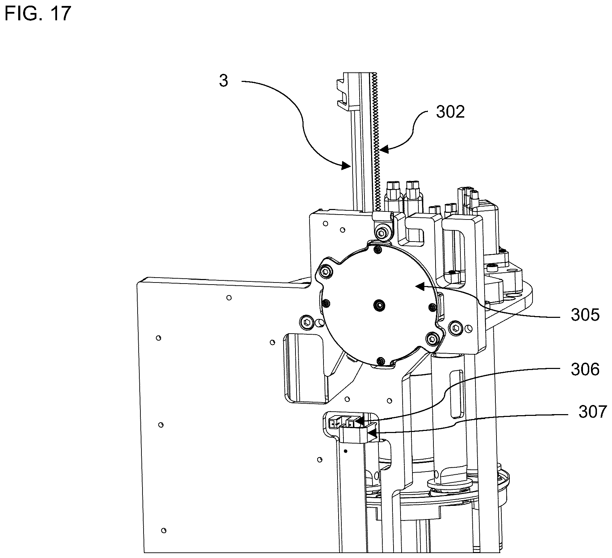

Rinsing channel 404 extends from a first hose connector 405 which connects rinsing channel 404 to a first hose (not shown) for the supply of rinsing buffer. A second hose connector 406 is used for a connection to a drain (shown in FIG. 17) in the direction of a bubble sensor and liquid waste (shown in FIG. 17) which is arranged outside the wash carousel (comp. FIG. 17).

Due to the integrated rinsing channel 404 the needle 3 is guided vertically through the needle rinsing station 4 and can thus be rinsed on its outer surface along its entire length - if necessary - during a vertical movement by flushing rinsing buffer through rinsing channel 404. Only the lower part of the needle 3 may get in contact with the liquid, so that only that part of the needle is rinsed which has been in contact with a fluid in a container.

In an embodiment of a method in an automated analyser system, it may be intended that the tip of aspiration needle 3 is rinsed with every upwards movement. For that, the z-drive first moves quickly upwards, and the rinsing pump is not yet active until the area of the needle tip is reached which is to be cleaned. Then, the z-drive slows down movement of the needle and the rinsing pump are activated so that the rinsing process commences.

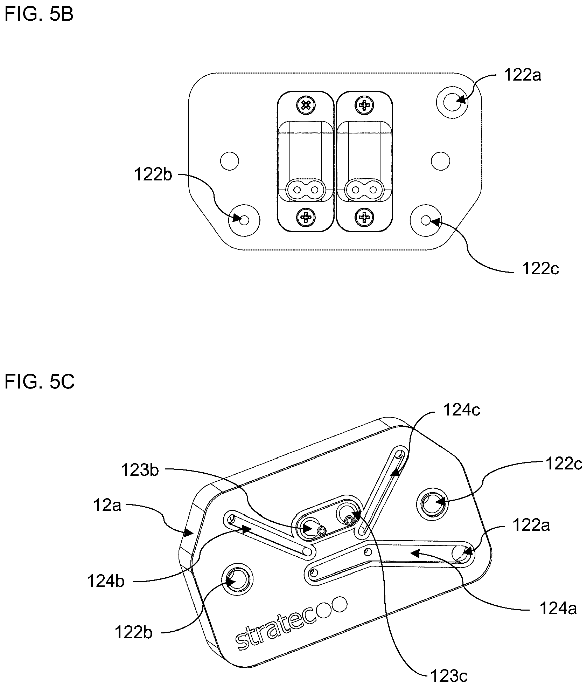

FIG. 5A shows a injector unit 12 which comprises two independent valves 12b, 12c, mounted on a common injector manifold 12a. The injector manifold 12a comprises two fluid supply connectors 122b and 122cfor supplying each of the two valves 12b, c with a fluid like a liquid, by connecting the respective injector unit 12 through hoses (not shown) to associated pumps (not shown) and fluid supplies. Fluid connector is a single drain connector 122a for both valves 12b, c and connected by a hose (not shown) to a drain or waste (comp. FIG. 5B).

FIG. 5C shows a bottom view onto a transparent injector manifold 12a. Fluid supply connectors 122b, c are connected to fluid supply channels 124b, c which guide the fluids to injectors 123b, c. Drain channel 124a is also connected to valves 12b, c and collects excrescent fluid for guiding it to drain connector 122a. Due to fluid still being provided to valves 12b, c when they are closed and the external pump is still running, there is a need to provide a drain for the resulting excrescent fluid.

Three injector units 12 which can be connected to a maximum of six different fluids allow the use of six different fluids to be dispensed via the injector units. The valves may be solenoid valves. Two different pumps may be used for providing the fluids, one for larger volumes and one for small volumes, with a higher precision regarding the dispensed volume. In an embodiment of the wash carousel, three injector units 12 may be present for a single wash carousel.

Valves 12b, c are connected through electrical connectors 121b, c to a controller which is located on the side wall PCB 7.

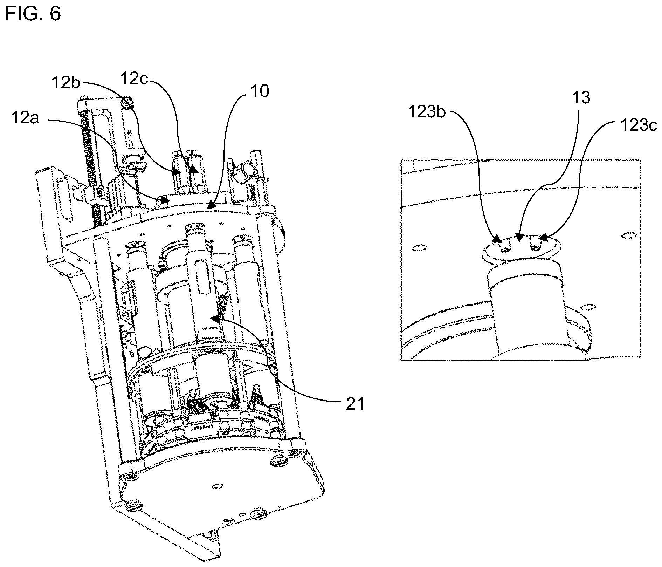

FIG. 6 shows a view on the lower surface of first level plate 10 with injectors 123b and 123c which are arranged above the openings 13 of the first level plate 10. Injectors 123b, c are connected to valves 12b, c which are mounted onto injector manifold 12a. The injector is at each position mounted above an opening 13 so that the injectors 123b and 123c can pass first level plate 10 and the openings 13 are positioned above a container-receiving position 21 in a processing position (described in detail below).

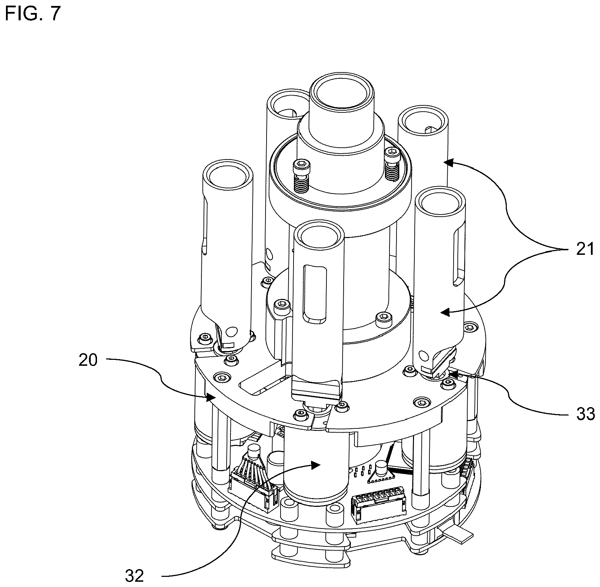

FIG. 7 shows an embodiment of a wash carousel without the upper first level according to the present invention. The container-receiving position level comprises in the shown embodiment five container-receiving positions 21 which are each connected through motor shaft 33 to a holder drive 32 which mounted to the lower side of second plate 20 and is thus located above the PCBs.

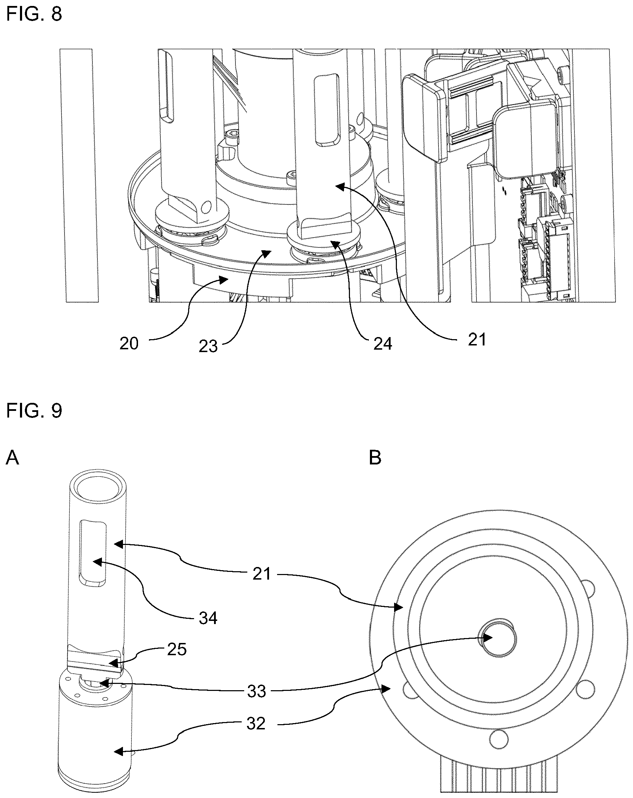

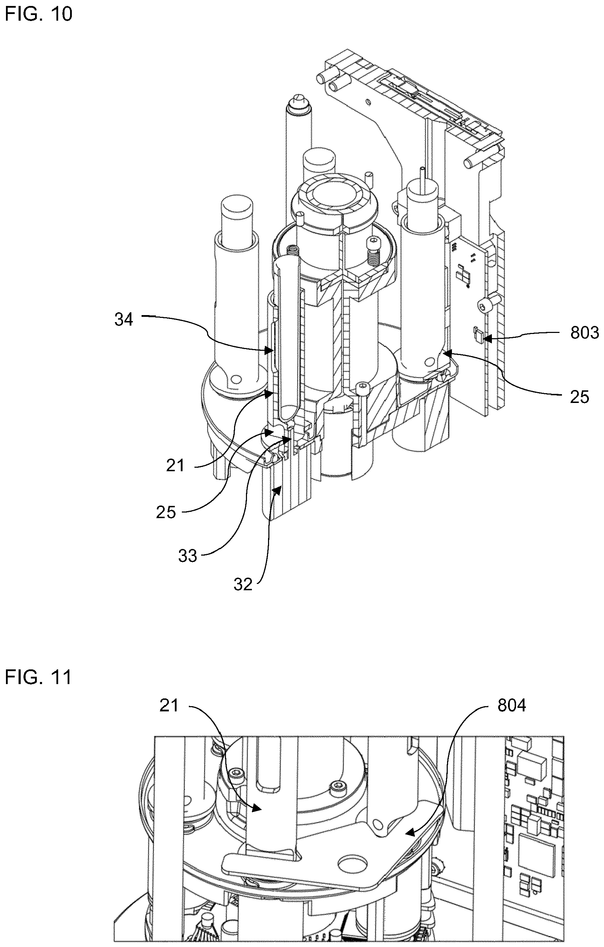

FIG. 8 shows that second level plate 20 has on its upper side a fluid protective element 23 which may be formed as a kind of a circular tray with upwards elevated edges at its outer circumference and the inner circumference surrounding the central rotor axis (comp. FIG. 10) so the electronics in the level below are protected from fluids like liquids as they will be retained by the protective cover element 23.

Each of the five container-receiving position 21 are identically formed. Between the fluid protective element 23 and the lower end of each container-receiving position 23 are sealing elements 24 arranged for sealing of the transition area, respectively the motor shaft (not visible) between container-receiving position 21 and fluid protective element 23 or between second and third level which is spanned motor shaft 33. Said sealing elements 24 can be disc-shaped silicone plates for instance, as can be taken from FIG. 8.

FIG. 9A shows a container-receiving position 21 in a perspective view and FIG. 9B shows a top view onto or into a container-receiving position 21 mounted onto a holder drive 32. Each of the five container-receiving position 21 comprises the container-receiving position 21 itself which connected through moto shaft 33 to the holder drive 32. The container-receiving position 21 has a basically cylindrical shape with one open end. It is mounted eccentrically on motor shaft 33 of a motor which is used for actuating holder drive 32 (comp. FIG. 9B) so that, when the motor rotates, the container-receiving position 21 moves on an orbital path. To reduce vibrations caused by the eccentric arrangement, the mass of the container-receiving position 21 is distributed asymmetrically, compensating for the eccentric arrangement of the container-receiving position 21. FIG. 9A shows an embodiment with a recess 25 on one side of the container-receiving position's 21 bottom end. A window 34 which has a rectangular shape is arranged on one side of the cylindrical container-receiving position 21. The window 34 is arranged above recess 25 in the embodiment shown in FIG. 9A.

The aspiration of unneeded fluid by the aspirating needle 3 must take place centrally in the container 5, as the desired components of the sample may have settled at the edge due to a centrifugation step prior to loading of the container into the container-receiving position. The aspiration needle 3 will only hit the centre of the container 5 at a certain angle of rotation of the carousel comprising the container-receiving position 21 when the container is in a centralised position below an opening 13.

FIG. 10 shows a container-receiving position which is mounted eccentrically on motor shaft 33 connecting it to holder drive 32 so that the container-receiving position 21 follows an orbital movement (comp. FIG. 9a, 9B). Due to this orbital movement, the position of the container and thus the container-receiving position 21 below the respective injector or the aspiration needle changes depending on the angle of rotation of the container drive. For this reason, a certain angle of rotation must be ensured before the respective process step comprising injection, aspiration, loading or unloading with a gripper takes place, because the container is only centrically located below the respective position at a specific angle of rotation.

The EC motor of holder drive 32 comprises Hall sensors (not shown) for motor commutation. The signals from these Hall sensors are also used to determine the position of the container. Since the position of the container is not unambiguously determined by the integrated Hall sensors, because a Hall sensor signal repeats after a half revolution, another sensor is necessary for determining in which half of the revolution the container-receiving position 21 is currently located. An optical sensor 27 for an optical reflection measurement by a time-of-light method is mounted on the fixed circuit board 7 and can thus distinguish between the two possible positions of the container-receiving position by measuring the light reflection which differs between a reflection from the recess 25 providing a straight surface towards the sensor or the round bottom end of the container-receiving position 21 providing a curved surface. The two possible revolutions determined by the Hall sensor can thus be distinguished with the additional optical sensor so that a centralised position of container-receiving position 21 below an opening 13 can be ensured.

Since the position of the motor shaft belonging to the assembly of holder drive 32 and container-receiving position 21 (not shown) in relation to the position of the container-receiving position 21 is undetermined at the time of assembly, the position must be taught to the system or a controller of the system once after its assembly. FIG. 11 shows teach brackets 804 which are used for fixing container-receiving positions 21 in a defined position. This is also the position in which the container are centred in a working position for aspiration, dispensing or loading/unloading. The determined Hall sensor position is then stored for each tube holder during this teach sequence. During operation, this position can then be approached again without a teach tool based on stored Hall sensor values and optical distance sensor values.

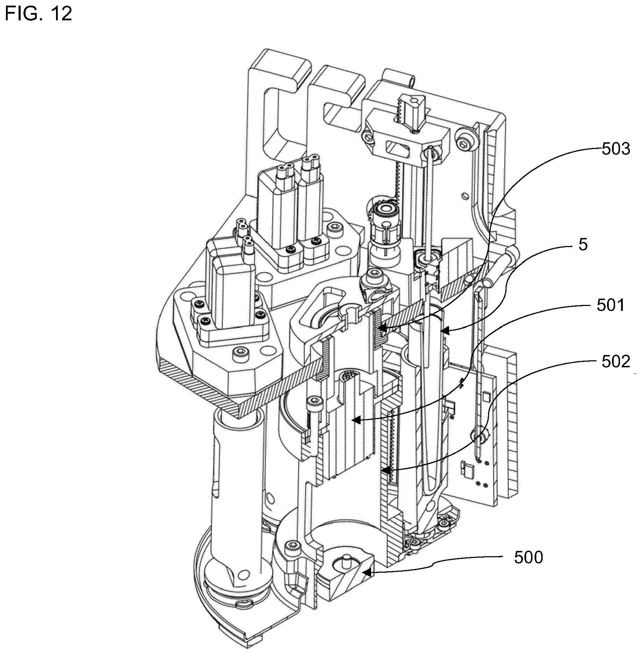

FIG. 12 shows a sectional view through a wash carousel according to the present invention. A gripper (not shown) for loading and unloading of the container 5 has to know the exact position of the container. For this reason, a correct detection of the wash carousel's angle of rotation is necessary. The motor 500 for rotating the wash carousel, as well as the slip ring 501 for signal and energy transmission are located inside an axis of the rotor 502 which is located in the centre of wash carousel (comp. FIG. 1). The upper end of axis 502 is mounted in a slide bearing 503 surrounding the upper end of axis 502

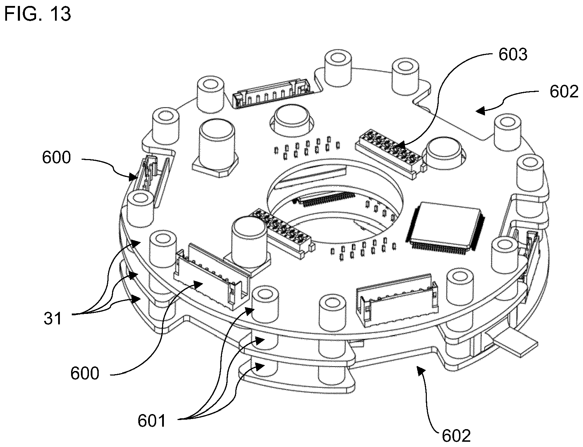

FIG. 13 shows the control electronics for the wash carousel which comprises in the shown embodiment three identical, stacked PCBs 31, wherein each PCB 31 comprises two motor controllers (not shown) and two motor plugs 600 for a connection to the motors of the holder drive 32. Due to their mechanical and circuitry properties, the PCBs 31 are arranged by rotating them by 120°, wherein the three PCBs 31 are placed on top of each other with distance bolts 601 between the PCBs 31 and as a spacer to second level plate 20 (not shown). This creates a sandwich of three PCBs 31 with which a total of six motors can be controlled. In the embodiment shown in FIG. 13, there are five motors for the holder drive 32 (comp. FIG. 7) and an additional motor 500 (comp. FIG. 12) for rotating the wash carousel 501. Due to the recesses 602 in the outer circumference of each PCB 31, the motor connectors of the underlying PCBs 31 are also accessible.

Each motor must still be uniquely controlled, so that each PCB 31 and thus the respective motor must be uniquely addressed. Each PCB may comprise one switch for addressing the respective PCB 31. However, since manual intervention is always a possible source of error, the motor drivers in this invention are addressed automatically by plugging them together through plug connectors 603.

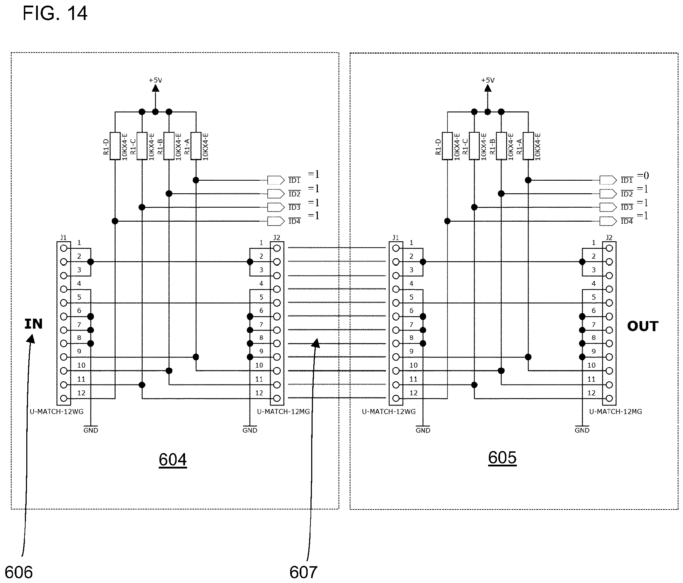

For this purpose, it may be intended that four address lines (ID1..ID4) are passed from PCB to PCB, but offset by one connector pin, thus creating the unique address for each PCB. With these four address lines, a maximum of five stacked PCBs can be uniquely addressed. FIG. 14 shows a circuit diagram for clear control of the motors.

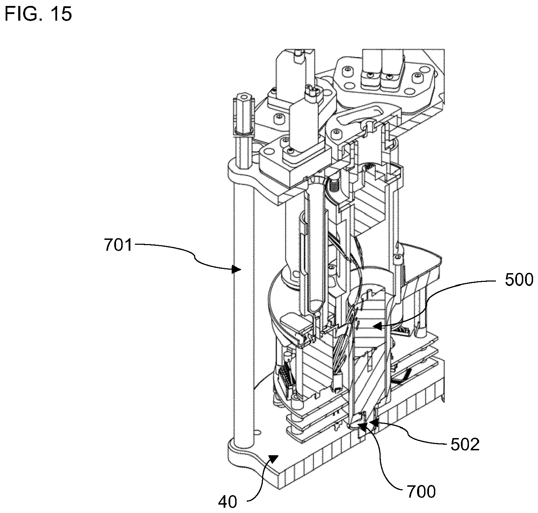

FIG. 15 shows base plate 40 which carries the entire assembly of the wash carousel and serves as a counter bearing for the rotating rotor drive. The axis of the rotor 502 is connected to the motor for rotating the wash carousel 500 and pivoted in the star-shaped bearing 700 which is fixed in base plate 40. Base plate 40 and first level plate 10 of the upper injector level are connected via cylindrical spacer bolts 701 which surround the carousel.

The position of the wash carousel is controlled and monitored by an EC motor and encoder. The EC motor may optionally comprise or is connected to a gearbox. Since this motor, like the motors for actuating the container-receiving positions 21, cannot measure unique wash carousel positions, it must be initialised once or after each switch-on.

FIG. 16 shows an embodiment for initialising the rotor position comprising a light barrier 800 which is positioned in proximity to the PCBs 31 on the vertically arranged fixed circuit board 7. A small flag 801 is arranged between two PCBs 31 of the PCB stack. Starting from this initialising position, which is defined as the position when the flag 801 interrupts the light barrier 800, relates to a position at which the container-receiving positions 32 are located in a process position, e.g. for injection, aspiration, loading, or unloading. Due to mechanical tolerances, however, this offset must be taught during assembly. For this purpose, there is a teach mark 802 in the base plate 40 which must be aligned with the flag 801. The offset determined during teaching is then stored in the fixed circuit board 7 which has the function or comprises the elements of a control unit which is used for every calibration.

FIG. 17 shows the elements which are involved for actuating the toothed rack 302 for moving the aspiration needle 3 up and down. The aspiration needle 3 is attached to the toothed rack 302 which can be moved vertically via the associated stepper motor 305. The position of the Z-axis is controlled on the basis of data stored during initialisation and the steps taken by the stepper motor, so there is no encoder required.

The vertical position of the aspiration needle 3 is initialised each time the unit is switched on by using a light barrier 306 for the toothed rack 302 which is also mounted on the fixed circuit board 7. The toothed rack 302 comprises a flag 307 that interrupts the light barrier so that the position of the toothed rack 302 can be determined.

The fluid in a container is in an embodiment of the present invention aspirated with a peristaltic pump, which is connected to the aspiration needle via a hose. Aspiration will continue until no further fluid is aspirated, because a peristaltic pump is not suitable for a precise control of the flow rate. The volume is determined by precisely adjusting the vertical position of the aspiration needle.

In order to be able to aspirate volumes precisely, or to leave a certain volume in the container, the vertical position of the aspiration needle must therefore be very well adapted to the vertical position of the respective container.

For each of the five container-receiving positions of the wash carousel comprising an injector assembly, the ratio between the position of the aspiration needle and the position of the container must therefore be taught once during initialisation of the system. The aspiration needle moves down as far as possible, even to the bottom of the container, in each container position for storing this position in a controller in relation to the initialisation position determined with the light barrier for each container-receiving position. The determined and stored data can then be used during operation of the wash carousel.

In addition, the vertical position of the aspiration needle in relation to the aspiration needle rinsing station must be very precisely determined in order to be able to rinse the needle tip in a defined manner. For this reason, this position is also taught during initialisation. As with the other teaching methods, a defined distance between the needle holder in the Z-axis and the aspiration needle rinsing station is set using the teach tool.

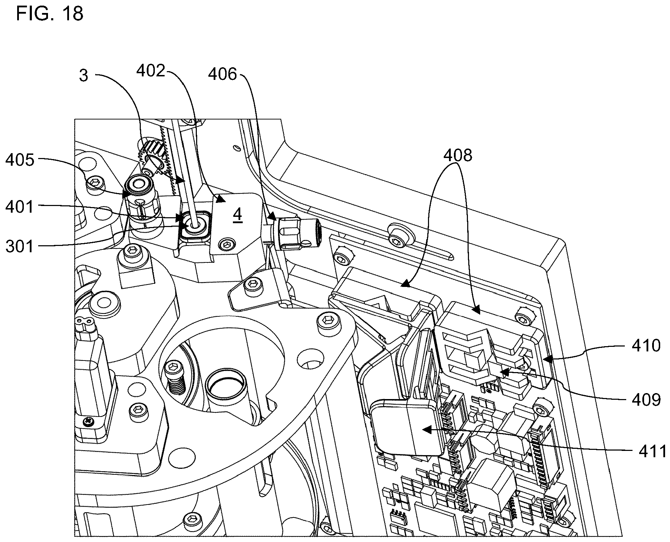

FIG. 18 shows the elements which are used for controlling aspiration and rinsing of the aspiration needle 3. Aspiration rinsing station 4 comprises a first hose connector 405 which connects a hose (not shown) coming from a rinsing buffer supply (not shown) with rinsing channel 404 (not shown). The rinsing channel (not visible) connects the first hose connection 405 and the second hose connection 406 and enters through the outer part 402 the inner part 401 of the needle rinsing station 4 where it surrounds in the bore and guiding 301 the vertically passing aspiration needle 3 so that it can be flushed with rinsing buffer.

The rinsing channel extends on the opposite side of the inner part 401 of the rinsing station 4 in the outer part of the rinsing station 402 and it ends at a second hose connector 406 for connecting a hose leading to a drain or waste for the rinsing buffer (not shown).

The contents of the aspiration and rinsing hoses are each monitored by an optical bubble sensor system by air/water detection. The bubble sensors 408 can be mounted on the fixed circuit board 7 and each comprises in an embodiment a light barrier 409 in a housing 410. The housing 410 can be opened, the hose is inserted and is then located between the two light barrier arms. The hose is fixed by closing cover 411 of housing 410.

The light barrier of bubble sensors 408 allows to distinguish whether air or liquid is present in the hose. For controlling and monitoring the aspiration it follows from the detection of air in the hose that the fluid level in the container has dropped to a level where the pump can be stopped because the tip of the aspiration needle is no longer dipped in the respective fluid to be aspirated.

The bubble sensor which is connected to the rinsing channel 404 of the aspiration needle rinsing station is used for monitoring whether flushing is taking place. For this purpose, is mounted between the second hose connector 406 of the aspiration needle rinsing station 4 and a liquid-waste (not shown). There is no complete sealing between aspiration needle 3 and the inner part of the rinsing station 401 for allowing the vertical movement of the aspiration needle 3 in the inner part of the rinsing station 401. Thus, an air-water mixture will always be sucked during rinsing of the aspiration needle 3 when rinsing buffer flushes around the part present in the rinsing channel 404 and thus in the hose leading to a waste or drain. The air-water mixture can be detected by the respective bubble sensor 408 as a kind of "noise". Continuous air or liquid in the hose would mean that there is a failure regarding the rinsing process.

The advantages of a device according to the present disclosure can be summarised as follows:
- Only one position serves for the loading and unloading of containers to the carousel so that all other container-receiving positions with injector assemblies are not accessible for a user or a device which is used for the loading and unloading of containers.
- One container-receiving position serves for aspirating fluids which will have to be transferred to a waste. This waste-position is separated from container-receiving positions serving for dispensing fluids so that the connected hoses and pump will only get in contact with waste or a fluid which is to be dispensed, respectively. The possibility of a contamination of fluids which are to be dispensed is thus reduced.
- Each container-receiving position is equipped with a motor for mixing fluids so that the subsequently added fluids can directly be mixed.
- The multiple levels of the carousel allow to place the required components where they are required.
- the device can be arranged in a housing allowing only at one position during rotation of the carousel the loading and unloading of container which contributes to a safe and reliable loading and unloading process which requires a rotatable carousel.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numeral

| | | | |
|---|---|---|---|
| 1 | wash carousel | 406 | second hose connection |
| 3 | aspiration needle | 408 | bubble sensor |
| 4 | aspiration needle rinsing station | 409 | light barrier bubble sensor |
| 5 | container | 410 | housing bubble sensor |
| 7 | side wall PCB | 411 | cover housing bubble sensor |
| 8 | fixed side wall | 500 | motor for rotating wash carousel |
| 10 | first level plate | 501 | upper slip ring |
| 11 | upper opening | 502 | rotor axis |
| 12 | injector unit | 503 600 | slide bearing motor plug |
| 12a | injector manifold | 601 | distance bolt |
| 12b, c | valves | 602 | recess PCB |
| 13 | opening | 603 | plug connector |
| 20 | second level plate | 604 | first PCB |
| 21 | container-receiving position | 605 | second PCB |
| 23 | fluid protective element | 606 | connection to parent controller |
| 24 | sealing element | 607 | connection between first and second PCB |
| 25 | recess container-receiving position | 700 | star shaped connector |
| 31 | PCB | 701 | space bolts |
| 32 | holder drive | 800 | light barrier |
| 33 | motor shaft | 801 | flag |
| 34 | window | 802 | teach mark |
| 40 | fourth level plate | 803 | optical distance sensor |
| 121b, c | electrical connectors | 804 | teach brackets |
| 122a | drain connector | | |
| 122b, | cfluid supply connector | | |
| 123b, c | injector | | |
| 124a | drain channel | | |
| 124b, c | fluid supply channel | | |
| 300 | needle holder | | |
| 301 | bore and guiding aspiration needle | | |
| 302 | toothed rack | | |
| 303 | toothed rack guiding | | |
| 304 | slide bearing | | |
| 305 | stepper motor | | |
| 306 | light barrier toothed rack | | |
| 307 | flag toothed rack | | |
| 401 | inner part needle rinsing station | | |
| 402 | outer part needle rinsing station | | |
| 403 | O-ring | | |
| 404 | rinsing channel | | |
| 405 | first hose connection | | |

## Claims

1. A device for the purification of samples, comprising a circular carousel which is rotatable around a vertical central axis and provides a plurality of container-receiving positions, and a fixed side wall attached to one side of the carousel, wherein the fixed side wall comprises
- a side wall PCB mounted to the fixed side wall;
- a toothed rack guiding for vertically moving an aspiration needle up and down;
- a motor for actuating the toothed rack;
- light barriers for determining the angle of rotation of the carousel;
- bubble sensors for monitoring aspiration of fluids from the containers and for monitoring rinsing of the aspiration needle; and wherein
the rotatable carousel comprises four vertically on top of each other arranged level, wherein
- a first level, which is the upper level, comprises injector assemblies which are arranged on a first level plate for dispensing fluids and an aspiration needle rinsing station for cleaning of the vertically crossing aspiration needle which is arranged onto said first level plate;
- a second level, below the upper level, comprises a plurality of container-receiving positions, each for receiving a container, wherein each container-receiving position of the plurality of container-receiving positions is arranged above a second level plate;
- a third level, below the second level, comprises stacked printed circuit boards;
- a fourth level, below the third level, comprising a base plate comprising counter bearings for the centrally arranged rotor axis of a motor as a drive for rotating the carousel and a slide bearing between an upper end of the rotor axis and the first plate;
wherein one position of the plurality of container-receiving positions is configured for a loading and unloading of containers to the carousel, wherein one position of the plurality of container-receiving positions provides an injector assembly configured for aspirating fluids by a connected pump, and wherein the remaining positions of the plurality of container-receiving positions provide an injector assembly configured for dispensing a fluid by a connected pump.

2. The device of claim 1, wherein the toothed rack guiding comprises a bore and guiding with at least one slide bearing which is crossed vertically by the toothed rack.

3. The device of claim 1 or 2, wherein a needle holder is arranged at the upper end of the toothed rack, and wherein the aspiration needle is fixed to the needle holder.

4. The device of claim 3, wherein the aspiration needle is mounted horizontally movable in x- and y- direction to the needle holder.

5. The device of any one of claims 1 to 4, wherein the gear wheel connected to the motor for actuating he toothed rack engages into the gearing of the toothed rack.

6. The device of any one of claims 1 to 5, wherein a single injector assembly comprises an injector manifold which is fixed on top of the first level plate, and which carries two valves.

7. The device of claim 6, wherein each injector assembly comprises two fluid supply connectors for connecting a hose coming from a fluid supply and a single drain connector for connecting a hose to a waste.

8. The device of any one of claims 1 to 7, wherein the aspiration needle rinsing station comprises an outer part and an inner part, wherein a rinsing channel runs through both parts.

9. The device of claim 8, wherein the inner part of the aspiration needle rinsing station is sealed against the outer part of the aspiration needle rinsing station and the rinsing channel surrounds in the inner part the bore and guiding for the vertically crossing aspiration needle.

10. The device of any one of claims 8 and 9, wherein the outer part of the aspiration needle rinsing station comprises a first and a second hose connector, wherein the first hose connector connects a hose coming from a rinsing buffer supply and the second hose connector connects a hose leading to a first bubble sensor on the fixed circuit board.

11. The device of any one of claims 1 to 11, wherein each container-receiving position of the plurality of container-receiving positions is connected eccentrically through a motor shaft to the motor.

12. The device of any one of claims 1 to 12, wherein the motor for actuating the container-receiving positions is an EC motor comprising a plurality of Hall sensors.

13. The device of any one of claims 11 to 13, wherein an optical sensor on the fixed circuit board is arranged at the level of the recesses of the container-receiving positions.

14. The device of any one of claims 1 to 14, wherein the PCBs of the third level comprise plugs for the connection of the stacked printed circuit boards to each other and plugs for the connection of the stacked printed circuit boards to an external controller and the motors as drives for each container-receiving position.

15. The device of any one of claims 1 to 15, wherein the fixed circuit board is arranged vertically on one side of the rotatable carousel.

16. The device of any one of claims 1 to 16, wherein the fixed circuit board is a control unit comprising a data storage.

17. A system comprising a device according to any one of claims 1 to 17 and a housing, wherein the rotatable carousel is arranged in the housing in a manner allowing the loading and unloading of containers only at one position during rotation of the carousel.
